(19) **Europäisches Patentamt / European Patent Office / Office européen des brevets**

(11) **EP 1 546 286 B1**

(12) # EUROPEAN PATENT SPECIFICATION

(45) Date of publication and mention of the grant of the patent:
**31.07.2013 Bulletin 2013/31**

(51) Int Cl.:
*C09K 21/04* (2006.01)  *C09K 21/06* (2006.01)
*A62D 1/00* (2006.01)  *A62D 1/06* (2006.01)

(21) Application number: **03783829.9**

(22) Date of filing: **05.08.2003**

(86) International application number:
**PCT/AU2003/000980**

(87) International publication number:
**WO 2004/015026 (19.02.2004 Gazette 2004/08)**

(54) **A FIRE RETARDANT AND A METHOD FOR PRODUCTION THEREOF**

FLAMMSCHUTZMITTEL UND DESSEN HERSTELLUNG

AGENT IGNIFUGE ET PROCEDE DE FABRICATION

(84) Designated Contracting States:
**AT BE BG CH CY CZ DE DK EE ES FI FR GB GR HU IE IT LI LU MC NL PT RO SE SI SK TR**
Designated Extension States:
**LT LV**

(30) Priority: **07.08.2002 AU 2002950614**

(43) Date of publication of application:
**29.06.2005 Bulletin 2005/26**

(73) Proprietor: **Deflamo AB**
**175 62 Järfälla (SE)**

(72) Inventor: **Nilsson, Jens Birger**
**Glenelg North**
**South Australia (AU)**

(74) Representative: **Karlsson, Leif Karl Gunnar**
**L.A. Groth & Co. KB**
**Box 6107**
**102 32 Stockholm (SE)**

(56) References cited:
WO-A1-03/059456   AU-B2- 615 140
US-A- 3 214 372   US-A- 3 274 105
US-A- 4 804 482   US-A- 5 091 097
US-A- 5 945 025

- 'Potassium carbonate', [Online] 23 May 2012, wikipedia Retrieved from the Internet: <URL:http://en.wikipedia.org/wiki/Potassium _carbonate> [retrieved on 2012-05-25]
- 'Acetate', [Online] 01 May 2012, wikipedia Retrieved from the Internet: <URL:http://en.wikipedia.org/wiki/Acetate> [retrieved on 2012-05-25]
- 'Speciation of ions', [Online] 27 February 2010, wikipedia Retrieved from the Internet: <URL:http://en.wikipedia.org/wiki/Speciatio n_of_ions> [retrieved on 2012-05-25]
- 'Base (chemistry)', [Online] 28 May 2012, wikipedia Retrieved from the Internet: <URL:http://en.wikipedia.org/wiki/Base_%28c hemistry%29> [retrieved on 2012-05-29]

**Description**

**FIELD OF THE INVENTION**

The present invention relates to a fire retardant composition and a method of producing thereof. More specifically, the invention is directed to a fire retardant composition having endothermic properties to absorb considerable amounts of heat in association with the initial stages of a fire, and a method of producing such a composition.

**BACKGROUND ART**

Traditionally, the hazardous effects of fire have been combated by the use of water. However, water as a sole agent is often unsuitable or ineffecient for combating certain fires. Hence, to improve the efficiency of water as a combating agent against fire, various materials and chemicals have been added to water.

For example, a physical partile suspension systems, such as liquid clay suspensions or water soluble chemicals to create mixtures that include surfactants to aid wetting, dispersion or penetration, foaming agents such as low boiling point chemicals, or methods such as the Incorporation of compressed gases to produce foams have all been used in combination with water to improve its combating effect against fire and the fire's hazardous effects.

AU 615 140 discloses a fire extinguishing composition which is an aqueous solution comprising acetic acid, citric acid or potassium citrate, and potassium carbonate. The fire extinguishing composition produces a foaming action when applied to a fire followed by rapid formation of a thick permanent matrix that covers the surface of the burning material thereby preventing re-ignition and flashback.

Nonetheless, many of these materials and properties of the modified water composition suffer inherent disadvantages, as such compositions are characterised in being toxic, corrosive, and/or detriment to the environment.

For example, the phosphates of sodium, potassium or ammonium when incorporated with water to improve the water's ability to combat fire results in the water having a relatively low thermal decomposition temperature, and thus under certain conditions will produce toxic gases as well as leaving a sticky residue during use.

US 3 274 105 discloses a fire extinguishing composition which is an aqueous solution comprising potassium acetate, tetra potassium pyrophosphate and preferably also phosphate ester as a wetting agent. Phosphate esters are notoriously hazardous for the environment.

Further, halogens are also conventionally added to improve the efficiency of water as a fire combating agent, but these also present disadvantages in respect to the environment, as such halogens can produce toxic gases and incur damage to the earth's ozone layer.

Hence, these conventionally known fire retardant compositions containing the above chemicals, as well as conventional brominated or phosphate ester flame retardants, all potentially involve a serious risk to biological life and its associated genetic structure.

In the context of this invention fire retardant is used to denote a chemical product that can prevent the ignition of fire or its development by binding considerable quantities of heat energy. The fire retardant provides a surface protection that can be applied to material so as to protect such material against the incident of fire and the associated open flame. This protection of the material against the open flame by not becoming material to fuel the fire, thereby prevents the further spread of the open flames of the fire.

US 4 804 482 discloses a fire retardant coating composition which is an aqueous solution comprising citric acid; carbonate, hydrogen carbonate and/or hydroxide of sodium and potassium. The composition is suitable for impregnating organic materials such as wood, cloth, foam material, etc.

US 5 091 097 discloses a fire inhibiting material which is an aqueous solution comprising citric acid and potassium hydroxide. The composition is suitable for impregnating trees, brush and other absorbent material.

However the problem still remains for a fire retardant composition to protect the surface of a material it is applied to and also to limit the spread of fire by restricting the ability of the open flame to travel over the protected surface, while still remaining inherently environmentally friendly, inexpensive to produce and potentially remove the serious risk of injury, if the composition comes in contact with human skin or is swallowed.

**OBJECTS OF THE INVENTION**

It is an object of this invention to provide a fire retardant composition that is naturally fully biodegradable and is able to absorb considerable amounts of heat energy, for example that heat associated with the Initial stages of a fire.

A further object of the present invention is to provide a method for the production of such a fire retardant composition.

A still further object of the present invention is to overcome, or at least substantially ameliorate some of the disadvantages and shortcomings of conventional fire retardant compositions and methods of producing thereof that have been previously made available, or alternatively, at least provide the public with an improved fire retardant composition and a method of producing thereof to those presently known.

## SUMMARY OF THE INVENTION

Accordingly, in one form of the invention there is provided a fire retardant surface protection composition for application to a surface to be protected against fire which composition comprises components (a) to (e) as defined by claim 1.

An advantage of such a fire retardant composition is that it is able to absorb large quantities of heat energy and therefore can be applied as a surface protection to materials to prevent ignition, reignition, or spread of the fire.

A further advantage is that the composition Includes Ingredients that are commercially readily available and inexpensive.

A further advantage of such a composition is that the fire retardant comprising the water with chemicals (b) to (e) is environmentally friendly.

Advantageously, the major components of the composition will readily undergo biodegradation, as the composition is near neutral in terms of pH value and is an ionic water soluble solution of non toxic ingredients, there is no adverse skin effect, if contact with the user is made.

A still further advantage is that the components that make up the fire retardant composition do not contain any known toxic or carcinogenic substances and hence such composition may be classified as "non hazardous" according to Work Safe Australia criteria.

A still further advantage of such a fire retardant composition is that as the composition is a near neutral pH it reduces or eliminates corrosion effect. By reducing or eliminating corrosion effects, the fire retardant composition may be applied in applications such as bushfire control or hose/pipe distribution systems such as a sprinkler network in a building.

The Community has considerable interest in controlling the incidence of uncontrolled spreading of fires. Presently such forest fires are controlled by the introduction of what are known as "fire breaks" in the forests and on the ground, and by spraying the foliage in these regions with a flame retardant. Nonetheless, as discussed above the problem with these conventionally known fire retardant compositions, is that they are inherently environmentally unfriendly, and therefore potentially may damage or kill material to which it is being applied to.

However, the fire retardant composition of the present invention by virtue of the components making up said composition, allows for the fire retardant to be placed onto plant foliage or the ground within the forest without adverse environmental effects. Since the environment is not in any way exposed to any toxic or harmful substances present in the fire retardant composition, there are no risks of future damage to the forest or the land by the application of the compositions.

The flame retardant composition of this invention provides an Improved alternative to the fire retardants that are currently used for active spreading through a sprinkler system when there is a risk of the incident of fire. Through the absence of environmental toxins and the extremely good energy absorbing ability of the fire retardant composition of this invention, there is provided a safe and practical composition that may be placed in environments that are characterised by, for example, "hot working" associated with welding or cutting processes. Advantageously, the same situation is true for equivalent environments for example storage locations which readily house and contain flammable products such as wood, paper and cellulose.

Coal dust in combination with methane gas constitutes a serious risk in the coal industry, and the flame retardant according to the invention should significantly reduce the risk for ignition of the coal dust and subsequent explosion.

A still further advantage of the fire retardant composition of the invention is that it may be used with readily flammable textiles without involving any disadvantages with respect to the colour or design of the textile.

In preference, the fire retardant composition highly concentrated alkali is at a concentration of greater than 80%.

In preference, the acetic acid is a concentrate and is at a concentration lever of above 90%.

The fire retardant compositions is characterised in that the phosphate is a tetra potassium pyrophosphate.

Preferably, the tetra potassium pyrophosphate is of a highly concentrated form of above 98% in order to avoid the formation of phosphate esters. The disadvantage of the creation of phosphate esters is due in part to the environmental risk these esters present to biological tissue.

In preference, the fire retardant composition further comprises anhydrous di-potassium carbonate.

An advantage of having the dipotassium carbonate included in the fire retardant composition is that it constitutes an additional component for stabilising the composition.

In preference, the fire retardant composition further comprises a softening agent. Preferably a surfactant having the equivalent or the same effect as Ampholak YCE Berol.

An advantage of having the fire retardant composition including a softener is that in certain applications it Improves the compositions ability to adhere to certain surfaces to be protected. For example, when the fire retardant composition is applied to textiles, the softener provides for efficient spreading of the composition into the depths of the fibres making up the textile.

In preference, the fire retardant composition has the composition adjusted for a resultant specific gravity in the range of 1.1 to 1.5. Preferably, the specific gravity of the composition is about 1.3.

In preference, the alkali metal salt or compound of the fire retardant composition is potassium acetate.

In preference, the fire retardant composition comprises the range of about 28% to 38% by weight of water.

In preference, the fire retardant composition comprises the range of 15-25% of the highly concentrated alkali. Preferably, the highly concentrated alkali is potassium hydroxide.

The fire retardant composition includes a combination of acetic add and citric acid. Preferably, the composition comprises a range of about 8-13% by weight of the acetic add. Further, the composition preferably comprises a range of about 17-24% by weight of the citric acid.

in preference, the fire retardant composition comprises a range of about 6-10% of dipotassium carbonate.

The phosphate Included in the fire retardant composition is tetra potassium pyrophosphate. Preferably, the composition comprises a range of about 1.5 to 3% by weight of tetra potassium pyrophosphate.

In preference, the fire retardant composition comprises a range of about 3 to 5% sodium hydrogen carbonate. Preferably, if a softener is added to the composition for more efficient spreading of the retardant onto material it will be in the range of .5 to 1.5% by weight of said composition.

In a further form of the invention, here is a method for producing a fire retardant surface protection composition for application to a surface to be protected against fire according to claim 1 wherein components (a) to (e) are added in sequence to a vessel under stirring as defined by claim 16.

In preference, the method of producing the fire retardant composition is further characterised in that the components added under stirring are simultaneously influenced by an energy wave, generated mechanically, during the simultaneous influence of a variable magnetic field, applied externally.

In yet another form of the invention, there is provided an article with surface treated with the fire retardant composition according to claim 1, as defined by claim 23.

## DETAILED DESCRIPTION OF THE INVENTION

To further illustrate this Invention, a series of fire retardant compositions were prepared with naturally fully degradable organic acids and non-organic alkali's that are mixed during stirring In a vessel, giving rise to chemical reactions, together with the addition of substances that stabilize the chemical reactions, such that the salt formed and the overall characteristics of the flre retardant composition have an endothermic property.

The design to produce a final product with an optimal endothermic property leads to the production process comprising exothermic reactions. Thus, large quantities of heat are developed during the mixing procedure. The use of the flame retardant compositions that contain only naturally occurring raw materials, with this no known risk to biological health, increases the opportunity for general use of the flame retardant composition produced by the methods described below.

EXPERIMENTAL PROCEDURES

## Example 1

The components that are included in the flame retardant composition together form an organic salt with a weakly basic pH In the region of 6.5 to 7.5, preferably 7.1 and a density within the region of 1.2 to 1.4, preferably 1.3. Such limits make it possible to apply the composition using simple known methods within most areas of possible application.

Example 1 is based on the mixing of non organic solutions with organic adds with a strong development of chemical heat (an exothermic reaction). By the addition of a fluid (such as water in Examples 1, 2) to a vessel that allows stirring in one plane of rotation (x,y) and by maintaining the stirring of the water such that the fluid itself rotates, advantageous conditions are created for an efficient mixing of the substances that are included in the composition and that involve an exothermic reaction.

The components listed below by weight will be added to the water component which has been placed in a high speed mixing vessel. Those values listed are a percentage by weight of the total fire retardant composition:

Water 33%

Potassium Hydroxide 21%

Acetic Acid 10%

Citric Acid 21%

Potash 8%

Tetra Potassium

Sodium Hydrogen Carbonate 4%

Softener 1%

The water component is placed in a mixing vessel and the other components added in the sequence listed below.

To the water is added a stream directed in towards to the centre of rotation of the water, of a highly concentrated (more than 87%) potassium hydroxide. With the addition of the highly concentrated alkali such as in the example, potassium hydroxide, a chemical reaction and the associated exothermic reaction will be achieved with this type of mixing.

This relevant mixture is rotated and a directed stream of a highly concentrated Acetic acid (above 96%) is added during vigorous stirring, whereby an exothermic reaction again arises.

A naturally occurring citric acid, completely free of water, is then added to the mixture which remains under continued rotation.

Dipotassium carbonate also known as potash and completely free of water, is then added during continued rotation. The carbonate constitutes an important component for stabilizing the mixture.

Phosphate is then added in a very low fraction as indicated above at about 2%. The phosphate is primarily chosen in the form of tetra potassium pyrophosphate and in a highly concentrated form (above 99.5%) in order to avoid the addition of phosphate esters. This is mainly due to the environmental risk of using phosphate esters. The tetra potassium pyrophosphate is added during vigorous stirring.

Sodium hydrogen carbonate is added after the addition of the phosphate in order to create a further stable mixture. It should be noted that 10% of the chemical raw materials are released in the form of carbon dioxide during the chemical processes.

In this example a softener is added to the composition.

The pH of the final product, for example 7.1, is adjusted to the desired value by the addition of potassium hydroxide or acetic acid.

The fire retardant composition is finally checked with respect to its density. The density should be approximately 1.3.

It has proved to be practically applicable that components added during stirring are simultaneously influenced by an energy wave, generated mechanically, during the simultaneous influence of a variable magnetic field, applied externally.

Example 2

In this example of a further illustrated form of the invention a fire retardant composition of a di-alkali-metal citrate salt in which the alkali-metal cation is selected from the Group 1A alkali-metals lithium, sodium and potassium and having a resultant pH value in the range of 6.5 to 7.5, by the addition of one or more Group 1A alkali-metal basic salts or compounds selected from the cations lithium, sodium and potassium, and the anions acetate, bicarbonate, carbonate and hydroxide.

The preferred citrate salt is di-potassium citrate and the preferred basic salt is potassium acetate. The retardant salt or salt mixture may optionally include a small amount of tetra potassium pyrophosphate, which is generally considered to be the least potentially harmful of the phosphate family, to improve performance stability and endothermic capacity at higher temperatures.

The retardant may optionally include additional neutralising or buffering compounds such as, for example, sodium bicarbonate and/or potassium carbonate.

The retardant has a pH value in the range of 6.5 to 7.5 and a specific gravity value in the range of 1.2 to 1.4, and a typical analysis (approximate values) of the retardant when made as indicated in Example 2 is pH = 7.15, SG = 1.365.

| | |
|---|---|
| Citrate salt | 10% |
| Acetat, salt | 28% |
| Phosphate salt | 2% |
| Sodium Bicarbonate | 3% |
| Water | 47% |

It should be noted that unless otherwise indicated, all percentages are percentages by weight referred to molecular weights, and all pH values and specific gravity values are In reference to measurements at 20°C. It should also be noted that the high salt concentrations will incur the "salt-effed" in respect of pH measurements. Solubility data should be consulted and taken into account for formulations in accordance with this example.

The retardant may be manufactured from the raw material ingredient citric add by controlled reaction with a basic salt or compound selected from the Group 1A alkali-metal cations of lithium, sodium and potassium, an the anions acetate, bicarbonate, carbonate and hydroxide, to produce di-alkali-metal citrate.

Citric acid has a molecular weight of 192.070, a solubility of 622 gm/1 (approx 3 gmw citric acid/55 gmw $H_2O$), and a pH in solution in water of between about 1.3 to about 2.0. It exhibits a temperature depression on solution (endothermic). Reaction of citric acid with basic substances generates considerable heat energy which is accompanied by frothing or foaming and care must be exercised to control the rate of reactant addition to keep the temperature down and avoid excessive foaming. In addition, the use of stainless steel mixing vessels and efficient mixing techniques will aid in heat dissipation and foam dispersion as well as increasing the efficiency of reaction.

The following steps illustrate various aspects of the reactions involved in the second example, and of a method of manufacturing.

Step 1

$$C_6H_8O_7 + 2\ KOH + 18\ H_2O = K_2C_6H_6O_7 + 20\ H_2O + Heat$$

$$192.070 + 112.216 + 324.288 = 268.254 + 360.320 = 628.574$$

$$42.7\% + 57.5\% = 100\%$$

Solution of 1 gmw of citric acid in 18 gmw of water gave a pH of about 2.0.

Controlled addition of 2 gmw of potassium hydroxide and keeping the temperature under 50°C results in the formation of mono-potassium citrate up to about pH 3.5 and then di-potassium citrate from about pH 3.5, up to about pH 5.2.

A similar reaction comprising $9C_6H_8O_7 + 18KOH + 50\ H_2O$ resulted in a pH of about 5.6

Step 2

In a similar manner to step 1 but using lithium carbonate as the basic reactant with citric acid, namely,

$$C_6H_8O_7 + Li_2CO_3 + 18\ H_2O = Li_2H_6O_7 + 19H_2O + CO_2$$

$$192.070 + 73.891 + 324.288 = 203.934 + 342,304 + 44.011 = 590.249$$

$$34.6\% + 58.0\% + 7.4\% = 100\%$$

As the solubility of lithium carbonate is very low at 1.3 gm/l (1 gmw $Li_2C\ O_3$/313 gmw $H_2O$), the citric acid is added to the water and then the lithium carbonate added as reactant. Less heat is generated in this reaction but the $CO_2$ evolution causes a considerable volume expansion as foam which must be mitigated with efficient mixing or stirring. As $CO_2$ is a "greenhouse" gas it should be collected for other use and prevented from entering the atmosphere. The pH of the resultant di-lithium citrate is about 4.5.

Step 3

In a similar manner,

$$2CH_3COOH + Li_2CO_3 + 8H_2O = 2\ CH_3COOLi + 9H_2O + CO_2$$

resulting at pH about 5.8.

Step 4

To 10 gmw of $H_2O$ is added 2 gmw of KOH slowly to control the heat of solution and keep the temperature below about 50°C. Then 1 gmw of acetic acid is slowly added to produce 1 gmw of potassium acetate $CH_3COOK$, at a pH of about 9.5.

$$C H_3COOH + KOH + 10 H_2O = CH_3COOK + 11 H_2O + HEAT$$

$$60.054 + 56.108 + 180.160 = 98.146 + 198.176 = 296.322$$

$$33.1\% + 66.5\% = 100\%$$

Step 5

In a similar manner to step 4,

$$18 CH_3COOH + 18 KOH + 50 H_2O = 18 CH_3COOK + 68 H_2O + HEAT$$

$$1080.972 + 1009.944 + 900.800 = 1766.628 + 1255.088 = 2991.716$$

$$59.1\% + 40.9\% = 100\%$$

This step reflects the minimum solubility requirement of KOH

Step 6

Solid $CH_3COOK$ is dissolved in water which results in an alkaline solution having a pH of from about 8.7, up to about 11.1 at the limit of solubility which is 2530 gm/l or 25 $CH_3COOK/55 H_2O$. 18 $CH_3COOK$ is added to 68 $H^2O$ and dissolved. 18 KOH dissolved in 130 $H_2O$ is then added followed by slow addition of solid citric acid. The reaction may be summarised -

$$18 CH_3COOK + 9 K_2C_6H_6O_7 + 216 H_2O$$

$$1766.628 + 2414.286 + 3891.456 = 8072.370$$

$$21.9\% + 29.9\% + 48.2\% = 100\%$$

Step 7

The ingredients are mixed in the following order:

| | |
|---|---|
| Water (pH6.5) | 33% |
| KOH (minimum 85% lye) | 21% |
| $CH_3COOH$ (minimum 96%) | 10% |
| Citric acid $C_6H_8O_7$ anhydrous | 21% |

At this stage the pH was measured at about 5.8, and SG = 1.310

| $K_2CO_3$ anhydrous | 8% |
| $K_4P_2O_7$ (minimum 99.5%) | 2% |
| $NaHCO_3$ (minimum 99.5%) | 4% |
| Surfactant - Ampholak YCE Berol | 1% |

The pH is adjusted to the preferred value using additional amounts of KOH $K_2CO_3$, or $N_aHCO_3$, or can also be adjusted by additional amounts of $CH_3COOK$, or acetic or citric acids as required.

The reactions of this example may be summarised as:

$$180\ H_2O + 18\ KOH + 18\ CH_3COOH = 18\ CH_3COOK + 198\ H_2O$$

$$18\ CH_3COOK + 188\ H_2O + 18\ KOH + 9C_6H_8O_7 = 18\ CH_3COOK + 9K_2C_6H_6O_7 + 216\ H_2O = 22\% + 30\% + 48\%$$

and on accounting for the additional ingredients will approximate to the typical analysis results described above.

The retardant when stored In an internal protected environment in a sealed container at room temperature has a shelf life in excess of 2 years. On exposure to external unprotected Australian Autumn/Winter conditions it will biodegrade in less than 3 months.

Measurements of temperature, pH and specific gravity in respect of the foregoing examples Indicate that the pH of the retardant product can be readily adjusted or buffered to a value from about 4.5 to 6.5, and advantage can be taken of this pH range to generate a near-neutral foam using the known "soda" or soda-acid" principle using appropriate ratios of the retardant to alkali-metal salt or compound of which sodium bicarbonate or potassium carbonate are preferred. Experiments were conducted which showed that a considerable amount of foam can be generated and pH measurements of the resultant foam showed that the pH was near-neutral, within the range of 6.5 to 7.5.

The retardant of this invention is also ideal for combination with other expansion agents such as the protein-based agents or some of the fluorolodocarbons (FICS) which are said to be non-toxic and environmentally safe. Compressed air foam systems (CAFS) using the retardant of this invention in concentrate for, i.e. formulated for minimum water content which in practical terms is about 60-75% by weight, may be particularly advantageous as a common mix ratio is 0.2% concentrate by volume producing a foam (average expansion =10) of 0.2% concentrate, 9.98% water and 98% air.

Thus the fire retardant compositions produced by the methods according to the invention are based upon chemical reactions between organic acids that are fully naturally degradable and non organic alkali's, with a certain addition of substances to stabilize the reaction, with the aim of forming a salt with good endothermic properties, suitable for the purpose of obtaining a non toxic, water soluble fire retardant that is naturally degradable.

## Claims

1. A fire retardant surface protection composition for application to a surface to be protected against fire which composition comprises:

   (a) water in an amount at least sufficient to dissolve the following (b) to (e) water soluble components up to an amount to be non corrosive,
   (b) a highly concentrated alkali, selected from the group consisting of lithium hydroxide, sodium hydroxide and potassium hydroxide,
   (c) an acidic concentrate including a combination of citric acid and acetic acid,
   (d) tetra potassium pyrophosphate,
   (e) an alkali metal compound selective from at least one of, or in combination with lithium, sodium, potassium cation in combination with at least one of an acetate, bicarbonate or carbonate,

   wherein a di-alkali-metal citrate salt is formed in which the alkali-metal cation is selected from the Group 1A alkali-metals lithium, sodium and potassium and having a resultant pH value in the range of 6.5 to 7.5, by the addition of one or more Group 1A alkali-metal basic salts or compounds selected from the cations lithium, sodium and potassium, and the anions acetate, bicarbonate, carbonate and hydroxide.

2. The composition of claim 1, wherein the acidic concentrate of the acetic acid is above 90%.

3. The composition according to any one of the preceding claims, wherein the highly concentrated alkali is at a concentration of greater than 80%.

4. The composition according to any one of the preceding claims, wherein the highly concentrated alkali is potassium hydroxide.

5. The composition according to any one of the preceding claims, further comprising an anhydrous dipotassium carbonate.

6. The composition according to any one of the preceding claims, wherein the composition further comprises a softening agent.

7. The composition according to claim 6, wherein the softening agent is present in the range of 0.5% to 1.5%.

8. The composition according to any one of the preceding claims, wherein the composition is adjusted for a resultant specific gravity in the range of 1.1 to 1.4.

9. The composition according to any one of the preceding claims, wherein the alkali metal salt or compound is potassium acetate.

10. The composition according to any one of the preceding claims comprising in the range of 28% to 38% by weight of said water.

11. The composition according to any one of the preceding claims comprising the highly concentrated alkali in the range of 15 to 25%.

12. The composition according to any one of the preceding claims, comprising in the range of 8% to 13% by weight of acetic acid.

13. The composition according to any one of the preceding claims, comprising in the range of 17% to 24% by weight of citric acid.

14. The composition according to any one of the preceding claims, comprising in the range of about 2% to 3% by weight of tetra potassium pyrophosphate.

15. The composition according to any one of the preceding claims 5 to 14, comprising in the range of about 6% to 10% by weight of dipotassium carbonate.

16. A method for the production of a fire retardant surface protection composition for application to a surface to be protected against fire according to claim 1 wherein the following components are added in sequence to a vessel under stirring:

(a) water in an amount at least sufficient to dissolve the following (b) to (e) water soluble components up to an amount to be non corrosive,
(b) a highly concentrated alkali selected from the group consisting of lithium hydroxide, sodium hydroxide and potassium hydroxide,
(c) an acidic concentrate including a combination of citric acid and acetic acid,
(d) tetra potassium pyrophosphate,
(e) an alkali metal compound selective from at least one of, or in combination with lithium, sodium, potassium cation in combination with at least one of an acetate, bicarbonate or carbonate,

whereby the added components are adapted such that the final product has a pH value in the range of 6.5 to 7.5.

17. The method according to claim 16, wherein the composition is adjusted for a resultant specific gravity in the range of 1.1 to 1.4

18. The method according to claim 16 and 17, wherein the acidic concentrate of the acetic acid is above 90%.

**19.** The method according to any one of claims 16 to 18, wherein the highly concentrated alkali is at a concentration of greater than 80%.

**20.** The method according to any one of claims 16 to 19, comprising in the range of 8% to 13% by weight of acetic acid.

**21.** The method according to any one of claims 16 to 20, comprising in the range of 17% to 24% by weight of citric acid.

**22.** The method according to any one of the claims 16 to 21, wherein the components added under stirring are simultaneously influenced by energy wave, generated mechanically, during the simultaneous influence of a variable magnetic field, applied externally.

**23.** Article with surface treated with the fire retardant composition according to claim 1.

**Patentansprüche**

**1.** Flammhemmende Oberflächenschutzzusammensetzung zum Aufbringen auf eine gegen Brände zu schützende Oberfläche, wobei die Zusammensetzung Folgendes umfasst:

(a) Wasser in einer Menge, die mindestens zum Lösen der folgenden wasserlöslichen Komponenten (b) bis (e) ausreicht, bis zu einer nicht korrosiven Menge,
(b) ein hochkonzentriertes Alkali, ausgewählt aus der Gruppe bestehend aus Lithiumhydroxid, Natriumhydroxid und Kaliumhydroxid,
(c) ein saures Konzentrat, das eine Kombination von Citronensäure und Essigsäure enthält,
(d) Tetrakaliumpyrophosphat,
(e) eine Alkalimetallverbindung, ausgewählt aus Lithium-, Natrium- und/oder Kalium-Kation in Kombination mit Acetat, Hydrogencarbonat und/oder Carbonat,

wobei durch Zugabe von einem oder mehreren basischen Gruppe-1A-Alkalimetallsalzen oder -verbindungen, ausgewählt aus den Kationen Lithium, Natrium und Kalium und den Anionen Acetat, Hydrogencarbonat, Carbonat und Hydroxid, ein Dialkalimetallcitratsalz gebildet wird, in dem das Alkalimetallkation aus den Gruppe-1A-Alkalimetallen Lithium, Natrium und Kalium ausgewählt ist, und mit einem resultierenden pH-Wert im Bereich von 6,5 bis 7,5.

**2.** Zusammensetzung nach Anspruch 1, wobei das saure Konzentrat der Essigsäure über 90%ig ist.

**3.** Zusammensetzung nach einem der vorhergehenden Ansprüche, wobei das hochkonzentrierte Alkali in einer Konzentration von mehr als 80% vorliegt.

**4.** Zusammensetzung nach einem der vorhergehenden Ansprüche, wobei es sich bei dem hochkonzentrierten Alkali um Kaliumhydroxid handelt.

**5.** Zusammensetzung nach einem der vorhergehenden Ansprüche, die ferner ein wasserfreies Dikaliumcarbonat umfasst.

**6.** Zusammensetzung nach einem der vorhergehenden Ansprüche, wobei die Zusammensetzung ferner einen Weichmacher umfasst.

**7.** Zusammensetzung nach Anspruch 6, wobei der Weichmacher in einer Menge im Bereich von 0,5 bis 1,5% vorliegt.

**8.** Zusammensetzung nach einem der vorhergehenden Ansprüche, wobei die Zusammensetzung auf ein resultierendes spezifisches Gewicht im Bereich von 1,1 bis 1,4 eingestellt ist.

**9.** Zusammensetzung nach einem der vorhergehenden Ansprüche, wobei es sich bei dem Alkalimetallsalz bzw. der Alkalimetallverbindung um Kaliumacetat handelt.

**10.** Zusammensetzung nach einem der vorhergehenden Ansprüche, die im Bereich von 28 bis 38 Gew.-% des Wassers umfasst.

**11.** Zusammensetzung nach einem der vorhergehenden Ansprüche, die das hochkonzentrierte Alkali in einer Menge im Bereich von 15 bis 25% umfasst.

**12.** Zusammensetzung nach einem der vorhergehenden Ansprüche, die im Bereich von 8 bis 13 Gew.-% Essigsäure umfasst.

**13.** Zusammensetzung nach einem der vorhergehenden Ansprüche, die im Bereich von 17 bis 24 Gew.-% Citronensäure umfasst.

**14.** Zusammensetzung nach einem der vorhergehenden Ansprüche, die im Bereich von etwa 2 bis 3 Gew.-% Tetrakaliumpyrophosphat umfasst.

**15.** Zusammensetzung nach einem der Ansprüche 5 bis 14, die im Bereich von etwa 6 bis 10 Gew.-% Dikaliumcarbonat umfasst.

**16.** Verfahren zur Herstellung einer flammhemmenden Oberflächenschutzzusammensetzung zum Aufbringen auf eine gegen Brände zu schützende Oberfläche nach Anspruch 1, bei dem man die folgenden Komponenten nacheinander unter Rühren in ein Gefäß gibt:

(a) Wasser in einer Menge, die mindestens zum Lösen der folgenden wasserlöslichen Komponenten (b) bis (e) ausreicht, bis zu einer nicht korrosiven Menge,
(b) ein hochkonzentriertes Alkali, ausgewählt aus der Gruppe bestehend aus Lithiumhydroxid, Natriumhydroxid und Kaliumhydroxid,
(c) ein saures Konzentrat, das eine Kombination von Citronensäure und Essigsäure enthält,
(d) Tetrakaliumpyrophosphat,
(e) eine Alkalimetallverbindung, ausgewählt aus Lithium-, Natrium- und/oder Kalium-Kation in Kombination mit Acetat, Hydrogencarbonat und/oder Carbonat,

wobei die zugegebenen Komponenten so adaptiert werden, dass das Endprodukt einen pH-wert im Bereich von 6,5 bis 7,5 aufweist.

**17.** Verfahren nach Anspruch 16, bei dem man die Zusammensetzung auf ein resultierendes spezifisches Gewicht im Bereich von 1,1 bis 1,4 einstellt.

**18.** Verfahren nach Anspruch 16 und 17, bei dem das saure Konzentrat der Essigsäure über 90%ig ist.

**19.** Verfahren nach einem der Ansprüche 16 bis 18, bei dem das hochkonzentrierte Alkali in einer Konzentration von mehr als 80% vorliegt.

**20.** Verfahren nach einem der Ansprüche 16 bis 19, das im Bereich von 8 bis 13 Gew.-% Essigsäure umfasst.

**21.** Verfahren nach einem der Ansprüche 16 bis 20, das im Bereich von 17 bis 24 Gew.-% Citronensäure umfasst.

**22.** Verfahren nach einem der Ansprüche 16 bis 21, bei dem die unter Rühren zugegebenen Komponenten während des gleichzeitigen Einflusses eines extern angelegten variablen Magnetfelds gleichzeitig durch eine mechanisch erzeugte Energiewelle beeinflusst werden.

**23.** Gegenstand mit mit der flammhemmenden Zusammensetzung nach Anspruch 1 behandelter Oberfläche.

**Revendications**

**1.** Composition de protection de surface ignifuge pour application à une surface à protéger contre le feu, laquelle composition comprend :

(a) de l'eau dans une quantité au moins suffisante pour dissoudre les composants hydrosolubles (b) à (e) suivants et jusqu'à une quantité pour être non corrosive,
(b) un alcali fortement concentré choisi dans le groupe constitué par l'hydroxyde de lithium, l'hydroxyde de sodium et l'hydroxyde de potassium,
(c) un concentré acide comprenant une combinaison d'acide citrique et d'acide acétique,
(d) du pyrophosphate de tétrapotassium,
(e) un composé de métal alcalin pouvant être choisi parmi au moins un des cations lithium, sodium et potassium ou une combinaison de ceux-ci, combiné avec au moins un des anions acétate, bicarbonate et carbonate, dans laquelle un sel de citrate de dimétal alcalin dans lequel le cation de métal alcalin est choisi parmi les métaux alcalins du groupe 1A lithium, sodium et potassium et ayant une valeur de pH résultante dans la gamme de 6,5 à 7,5 est formé par l'addition d'un ou plusieurs sels basiques ou composés de métaux alcalins du groupe 1A choisis parmi les cations lithium, sodium et potassium et les anions acétate, bicarbonate, carbonate et hydroxyde.

2. Composition selon la revendication 1, dans laquelle le concentré acide de l'acide acétique est à plus de 90 %.

3. Composition selon l'une quelconque des revendications précédentes, dans laquelle l'alcali fortement concentré est à une concentration supérieure à 80 %.

4. Composition selon l'une quelconque des revendications précédentes, dans laquelle l'alcali fortement concentré est l'hydroxyde de potassium.

5. Composition selon l'une quelconque des revendications précédentes, comprenant en outre un carbonate dipotassique anhydre.

6. Composition selon l'une quelconque des revendications précédentes, la composition comprenant en outre un plastifiant.

7. Composition selon la revendication 6, dans laquelle le plastifiant est présent dans une gamme de 0,5 % à 1,5 %.

8. Composition selon l'une quelconque des revendications précédentes, la composition étant ajustée pour une gravité spécifique résultante dans la gamme de 1,1 à 1,4.

9. Composition selon l'une quelconque des revendications précédentes, dans laquelle le sel ou composé de métal alcalin est l'acétate de potassium.

10. Composition selon l'une quelconque des revendications précédentes, comprenant entre 28 % et 38 % en poids de ladite eau.

11. Composition selon l'une quelconque des revendications précédentes, comprenant l'alcali fortement concentré dans la gamme de 15 à 25 %.

12. Composition selon l'une quelconque des revendications précédentes, comprenant entre 8 % et 13 % en poids d'acide acétique.

13. Composition selon l'une quelconque des revendications précédentes, comprenant entre 17 % et 24 % en poids d'acide citrique.

14. Composition selon l'une quelconque des revendications précédentes, comprenant entre environ 2 % et 3 % en poids de pyrophosphate de tétrapotassium.

15. Composition selon l'une quelconque des revendications 5 à 14, comprenant entre environ 6 % et 10 % en poids de carbonate dipotassique.

16. Procédé de préparation d'une composition de protection de surface ignifuge pour application à une surface à protéger contre le feu selon la revendication 1 dans lequel les composants suivants sont ajoutés en séquence dans une cuve sous agitation :

(a) de l'eau dans une quantité au moins suffisante pour dissoudre les composants hydrosolubles (b) à (e) suivants et jusqu'à une quantité pour être non corrosive,
(b) un alcali fortement concentré choisi dans le groupe constitué par l'hydroxyde de lithium, l'hydroxyde de sodium et l'hydroxyde de potassium,

(c) un concentré acide comprenant une combinaison d'acide citrique et d'acide acétique,

(d) du pyrophosphate de tétrapotassium,

(e) un composé de métal alcalin pouvant être choisi parmi au moins un des cations lithium, sodium et potassium ou une combinaison de ceux-ci, combiné avec au moins un des anions acétate, bicarbonate et carbonate, les composants ajoutés étant adaptés de telle sorte que le produit final a une valeur de pH dans la gamme de 6,5 à 7,5.

17. Procédé selon la revendication 16, dans lequel la composition est ajustée pour une gravité spécifique résultante dans la gamme de 1,1 à 1,4.

18. Procédé selon la revendication 16 ou 17, dans lequel le concentré acide de l'acide acétique est à plus de 90 %.

19. Procédé selon l'une quelconque des revendications 16 à 18, dans lequel l'alcali fortement concentré est à une concentration supérieure à 80 %.

20. Procédé selon l'une quelconque des revendications 16 à 19, comprenant entre 8 % et 13 % en poids d'acide acétique.

21. Procédé selon l'une quelconque des revendications 16 à 20, comprenant entre 17 % et 24 % en poids d'acide citrique.

22. Procédé selon l'une quelconque des revendications 16 à 21, dans lequel les composants ajoutés sous agitation sont simultanément influencés par une onde énergétique générée mécaniquement, pendant l'influence simultanée d'un champ magnétique variable appliqué de l'extérieur.

23. Article avec une surface traitée avec la composition ignifuge selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 615140
- US 3274105 A
- US 4804482 A
- US 5091097 A